# FASCICULE DE BREVET EUROPEEN

(11) **EP 0 526 275 B1**
(45) Date de publication et mention de la délivrance du brevet: **02.03.1994**
(21) Numéro de dépôt: 92401784.1
(22) Date de dépôt: 25.06.1992
(51) Int. Cl.: B60T 8/18, B60T 11/34

(54) **Correcteur de freinage perfectionné**
Bremskraftregler
Brake pressure regulator

(30) Priorité: 30.07.1991 FR 9109668
(43) Date de publication de la demande: 03.02.1993
(73) Titulaire: ALLIEDSIGNAL EUROPE SERVICES TECHNIQUES, 93700 Drancy (FR)
(72) Inventeur: Castel, Philippe, Bendix Europe Serv.Techniques, F-93700 Drancy (FR)
(74) Mandataire: Bentz, Jean-Paul

(56) Documents cités:
- EP-A- 0 156 666
- DE-A- 3 707 536
- FR-A- 2 383 048
- GB-A- 2 190 174

## Description

La présente invention concerne un perfectionnement aux correcteurs de freinage pour véhicules automobiles, et plus particulièrement aux correcteurs du type comportant un boîtier pourvu d'un alésage, un piston simple ou différentiel coulissant dans l'alésage et y délimitant une première et une seconde chambres de pression susceptibles d'être reliées à une source de fluide sous pression et à l'un des circuits de freinage du véhicule, respectivement, les chambres communiquant entre elles par l'intermédiaire d'un passage ménagé dans le piston, une soupape montée dans le passage et élastiquement sollicitée en appui étanche contre un siège formé sur le piston, et un ressort de rappel interposé entre un élément mobile dont la position varie en fonction de la charge du véhicule et le piston de manière à solliciter ce dernier vers le fond de la seconde chambre, dans une position de repos pour laquelle la soupape se trouve écartée de son siège par une butée.

Un tel correcteur de freinage, plus particulièrement conçu comme "compensateur", est notamment décrit, et son rôle ainsi que son mode de fonctionnement expliqués, dans FR-A-2 383 048 ou EP-A-0 156 666.

Dans un correcteur du genre sus-mentionné, il est souhaitable, pour obtenir un fonctionnement correct des freins lors de la mise sous pression du fluide d'actionnement, de disposer d'une assez grande ouverture de la soupape, c'est-à-dire d'un écartement suffisant de cette soupape (le plus souvent constituée par une bille) par rapport à son siège en position de repos du piston. Par ailleurs, il est nécessaire de réduire le plus possible la course du piston entre sa position de repos et sa position correspondant au point d'intervention du compensateur, c'est-à-dire celle où la bille vient reposer sur son siège, et cela pour éviter de perturber l'information transmise à ce piston sous la forme d'une force reflétant la charge du véhicule.

Ces deux exigences étant en principe incompatibles, la présente invention se donne pour but de corriger ce défaut, et elle propose à cet effet un correcteur de freinage du type rappelé ci-dessus, dans lequel le mouvement relatif de la bille et du piston est amplifié par rapport à celui du piston et du corps.

Selon l'invention, qui est définie par la revendication 1, on atteint ce but en montant la butée mobile par rapport au fond de la seconde chambre, cette butée reposant sur un moyen formant levier et prenant appui sur le fond et sur une extrémité du piston dans la seconde chambre. Selon un mode de réalisation, le fond de la seconde chambre affecte une forme ré-entrante, le piston comporte une partie faisant saillie en regard de la partie sensiblement la plus basse du fond, la butée reposant sensiblement au centre d'une rondelle préformée faisant levier lorsque la partie faisant saillie s'appuie sur elle.

Les caractéristiques et avantages de l'invention apparaîtront plus clairement à la lecture de la description suivante d'une forme préférentielle de réalisation appliquée au cas d'un compensateur de freinage, donnée à simple titre d'exemple illustratif et en se référant aux dessins ci-annexés, en lesquels :
- La Figure 1 illustre en élévation et coupe partielle un compensateur de freinage équipé du dispositif de l'invention, et représenté en position d'actionnement des freins ; et
- La Figure 2 montre en coupe à plus grande échelle et de façon schématique le moyen mis en oeuvre dans le compensateur de freinage de la Figure 1 au repos.
- Les Figures 3 et 4 représentent schématiquement deux autres modes de réalisation d'un moyen formant levier conformément à l'invention.

Le compensateur de freinage 10 représenté sur les dessins comporte, de façon connue, un boîtier 12 pourvu d'un alésage à gradin 14 dans lequel est reçu en coulissement étanche un piston différentiel 16. Celui-ci divise la cavité intérieure de l'alésage en une première chambre de pression dite d'entrée 18, qui est adjacente à la face de petite section du piston 16 et peut être reliée à une source de fluide sous pression telle qu'un maître-cylindre hydraulique de freinage de type tandem (non représenté), et en une seconde chambre de pression dite de sortie 20, qui est adjacente à la face de grande section du piston 16 et peut être reliée à l'un des circuits de freinage du véhicule, en l'occurrence le circuit desservant les freins de roues arrière (non représenté). Les chambres 18 et 20 communiquent entre elles par l'intermédiaire d'un passage 22 ménagé dans le piston 16, cette communication étant contrôlée par une soupape constituée par une bille 24 élastiquement sollicitée en appui étanche contre un siège 26 solidaire du piston par un léger ressort 28 comprimé dans le passage 22. Au repos, et ainsi qu'il sera expliqué ci-après, le piston 16 est repoussé élastiquement en direction du fond 15 de l'alésage 14 et la bille 24 se trouve alors écartée de son siège 26 par une butée en forme d'aiguille 30 du boîtier, maintenant ainsi ouverte la communication entre les chambres 18 et 20.

L'extrémité libre 17 du piston 16, opposée à celle portant le siège de soupape 26, fait face à un poussoir 32 solidaire d'un levier 34 monté pivotant sur le boîtier 12, levier dont la position angulaire est fonction de la charge supportée par l'essieu arrière du véhicule ; plus cette charge est importante, plus le levier 34, rendu solidaire de la suspension par l'intermédiaire d'un système élastique non représenté, s'abaisse rapprochant ainsi le poussoir 32 de l'extrémité libre 17 du piston 16. Entre poussoir et piston est enfin interposé un ressort de compression 36 qui joue le rôle de ressort de rappel et tend, en l'absence d'autre sollicitation, à repousser le piston 16 vers le fond 15 de l'alésage, la force de ce ressort déterminant ainsi qu'il est bien connu la position du point d'intervention du compensateur sur la caractéristique de freinage du véhicule.

Le fond 15 de l'alésage affecte une forme ré-entrante, telle que celle affectée par le cul de certaines bouteilles. En d'autres mots, la périphérie 13 du fond 15 est plus basse que la zone centrale du fond 15. Une rondelle 40 présentant une partie périphérique plane et une zone centrale en forme de dôme est disposée sur le fond 15 de l'alésage, et la butée en forme d'aiguille 30 repose sur le sommet du dôme de cette rondelle. L'extrémité 42 du piston, qui est traversée par cette butée en forme d'aiguille 30, est pourvue d'une patte 44 faisant saillie en regard de la partie la plus basse, ou périphérique, 13 du fond.

Cette patte 44 vient s'appuyer sur la partie périphérique de la rondelle 40 au repos. Celle-ci bascule alors et, faisant levier en s'appuyant sur le fond 15 de l'alésage, soulève la butée en forme d'aiguille 30.

Au repos, c'est-à-dire en l'absence de pressurisation du fluide hydraulique, le piston 16 est repoussé ainsi qu'il vient d'être dit par le ressort de rappel 36 vers le fond 15 de l'alésage 14, la patte 44 fait basculer la rondelle 40 qui soulève l'aiguille 30, la bille 24 est alors écartée du siège de soupape 26 d'un distance plus importante que la longueur du déplacement effectif du piston 16 par rapport au corps 12. La pression régnant dans les chambres 18 et 20 est alors la même, soit pratiquement nulle, et les freins du véhicule ne sont pas actionnés. Lorsque le conducteur du véhicule désire serrer les freins, la montée en pression du fluide s'effectue simultanément dans les deux chambres jusqu'au moment où la résultante des poussées inégales qui s'exercent sur le piston différentiel devient suffisante pour vaincre la force du ressort de rappel 36, et éventuellement la force élastique qui maintient abaissé le levier pivotant 34, provoquant ainsi le soulèvement du piston 16 (et éventuellement celui du levier 34).

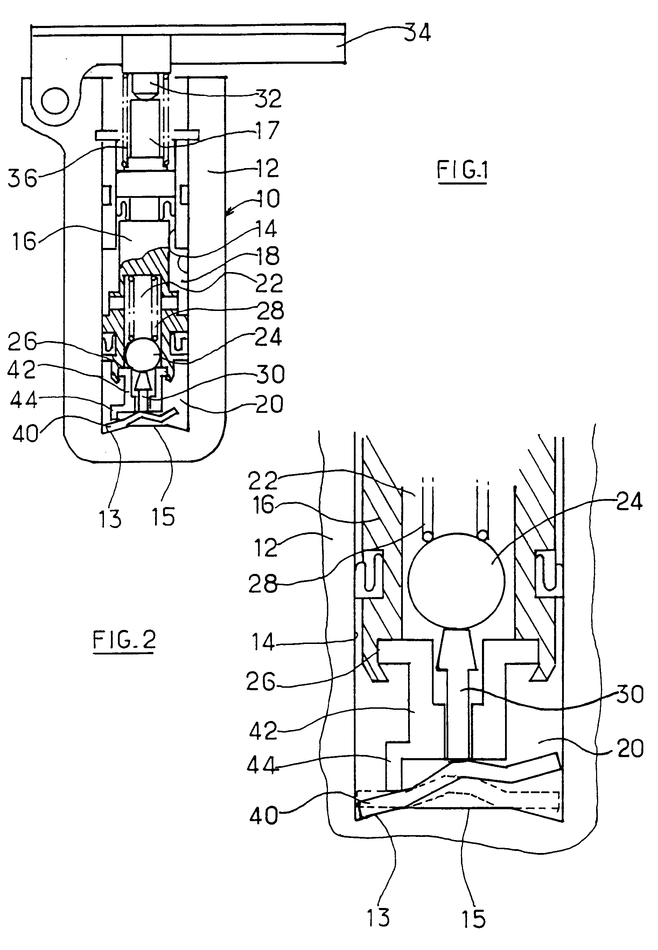

Ce faisant, la patte 44 ne s'appuie plus sur la rondelle 40 qui reprend une position sensiblement horizontale sur le fond 15 de l'alésage comme représenté en pointillés Figure 2. L'aiguille 30, de ce fait descend. Le mouvement du piston se poursuit jusqu'à ce que le siège de soupape 26 revienne en contact avec la bille 24. A partir de cet instant, la poursuite de la montée en pression du fluide contenu dans la chambre d'entrée 18 entraîne une succession d'opérations d'ouverture/fermeture de la soupape 24, 26, en sorte que la montée en pression du fluide contenu dans la chambre de sortie 20 et donc dans le circuit de freinage des roues arrière du véhicule s'effectue avec une pente d'accroissement réduite. Lorsque le conducteur relâche la pédale de frein, la pression dans la chambre 18 retombe et la pression différentielle qui s'exerce sur la bille 24 change de sens, provoquant l'ouverture de la soupape et l'égalisation des pressions dans les deux chambres ainsi que le retour du piston vers sa position de repos. La valeur de la pression d'entrée qui provoque la première manoeuvre de fermeture de la soupape lors d'une opération de serrage des freins, ou "point d'intervention" du compensateur qui marque l'infléchissement de la pente de la courbe de pression de sortie, dépend naturellement des caractéristiques constructives du piston 16 ainsi que de la force du ressort de rappel 36 elle-même influencée par la position du levier pivotant 34, c'est-à-dire par la charge du véhicule, ainsi qu'il est bien connu des spécialistes du freinage automobile.

On obtient ainsi une réponse rapide des freins, en disposant d'une ouverture franche de la soupape en position de repos, c'est-à-dire d'un écartement notable entre bille 24 et siège 26 tout en conservant une course minimale du piston 16 compatible avec la conservation de l'information de la charge du véhicule.

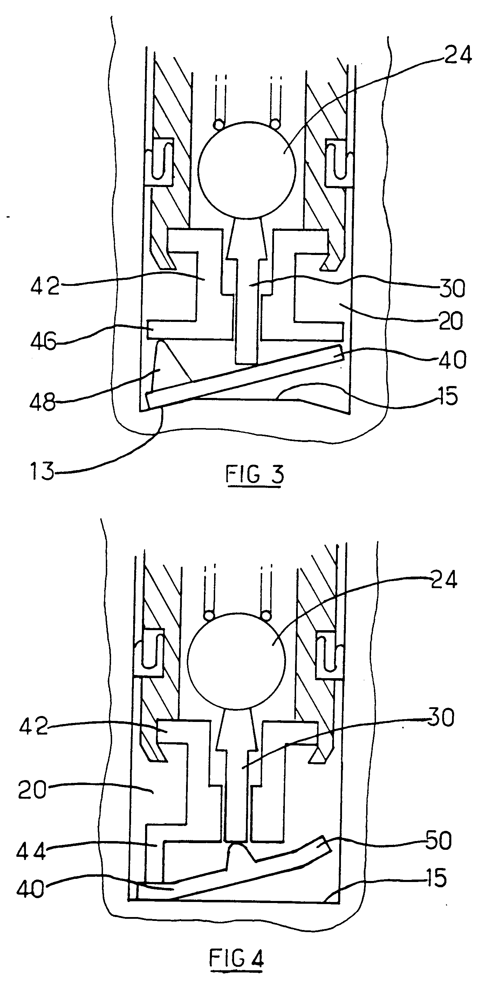

De nombreuses variantes peuvent être apportées à l'invention comme le montre les Figures 3 et 4 qui illustrent schématiquement deux autres modes de réalisation.

Figure 3, le fond 15 de l'alésage affecte également une forme ré-entrante. L'extrémité 42 du piston présente une partie 46 faisant saillie radialement et susceptible de venir en appui sur un bras 48 d'une rondelle preformée 40 et ménagé en regard de la partie la plus basse, ou périphérique, 13 du fond 15.

Figure 4, le fond 15 de l'alésage est plat, et la rondelle 40 présente une partie périphérique 50 relevée pour former levier lorsque la patte 44 faisant saillie du piston vient s'y appuyer.

Bien que l'invention soit décrite ci-dessus dans le cas particulier d'application à un compensateur de freinage, il doit être entendu qu'elle peut pareillement s'appliquer en procurant les mêmes avantages au cas d'un limiteur de pression équipé d'un piston simple, en sorte que son domaine d'emploi recouvre les correcteurs de freinage au sens large du terme.

## Revendications

1. Correcteur de freinage interposable entre une source de pression hydraulique et un circuit de freinage de véhicule automobile, du type comportant un boîtier (12) pourvu d'un alésage (14), un piston simple ou différentiel (16) coulissant dans ledit alésage et y délimitant une première (18) et une seconde (20) chambres de pression susceptibles d'être reliées à la source de pression et audit circuit de freinage, respectivement, lesdites chambres (18, 20) communiquant entre elles par l'intermédiaire d'un passage (22) ménagé dans ledit piston (16), une soupape (24) montée dans ledit passage et élastiquement sollicitée en appui étanche contre un siège (26) formé sur ledit piston (16), et un ressort de rappel (36) interposé ente un élément mobile (32) dont la position varie en fonction de la charge du véhicule et ledit piston (16) de manière à solliciter ce dernier vers le fond (15) de ladite seconde chambre (20), dans une position de repos pour laquelle ladite soupape (24) se trouve écartée de son siège par une butée (30), caractérisée en ce que ladite butée (30) est montée mobile par rapport au fond (15) de ladite seconde chambre (20) et repose sur un moyen (40) formant levier, qui prend appui sur ledit fond (15) et sur une extrémité (42) dudit piston (16) dans ladite second chambre (20) et qui contraint la butée à se déplacer dans un sens opposé au mouvement dudit piston (16) quand ce piston (16) vient s'appuyer sur ce moyen (40) formant levier.

2. Correcteur de freinage selon la revendication 1, caractérisé en ce que ledit fond (15) de ladite seconde chambre (20) affecte une forme ré-entrante, que ladite extrémité (42) dudit piston (16) comporte une partie (44, 48) faisant saillie en regard de la partie sensiblement la plus basse (13) dudit fond (15), et que ladite butée (30), repose sensiblement au centre d'une rondelle préformée (40) faisant levier lorsque ladite partie faisant saillie (44) s'appuie sur elle.

3. Correcteur de freinage selon la revendication 2, caractérisé en ce que ladite rondelle (40) présente une partie périphérique plane et une zone centrale en forme de dôme au sommet duquel repose ladite butée (30).

4. Correcteur de freinage selon la revendication 1, caractérisé en ce que ladite butée (30) repose sensiblement au centre d'une rondelle (40) dont la partie périphérique (50) est relevée pour former levier et sur laquelle est susceptible d'appuyer une partie (44) faisant saillie de ladite extrémité (42) dudit piston (16).

## Patentansprüche

1. Zwischen eine Hydraulikdruckquelle und den Bremskreis eines Kraftfahrzeugs einsetzbarer Bremskraftregler, vom Typ mit einem mit einer Bohrung (14) versehenen Gehäuse (12), einem einfachen oder einem Ausgleichskolben (16), der in der Bohrung gleitet und dort eine erste (18) und eine zweite Druckkammer (20) abgrenzt, die mit der Druckquelle bzw. dem Bremskreis verbunden werden können, wobei die Kammern (18, 20) über einen in dem Kolben (16) vorgesehenen Durchgang (22) miteinander in Verbindung stehen, einem in dem Durchgang angebrachten Ventil (24), das elastisch in dichte Anlage gegen einen an dem Kolben (16) ausgebildeten Sitz vorgespannt ist, sowie einer Rückstellfeder (36), die zwischen ein bewegliches Element (32), dessen Position in Abhängigkeit von der Ladung des Fahrzeugs variiert, und den Kolben (16) eingesetzt ist, so daß dieser in einer Ruhestellung, bei der das Ventil (24) durch einen Anschlag (30) von seinem Sitz entfernt ist, zum Boden der zweiten Kammer (20) hin vorgespannt ist, dadurch gekennzeichnet, daß der Anschlag (30) bezüglich des Bodens (15) der zweiten Kammer (20) beweglich gelagert ist und auf einem einen Hebel bildenden Mittel (40) ruht, das an dem Boden (15) sowie an einem Ende (42) des Kolbens (16) in der zweiten Kammer anliegt, und das den Anschlag dazu zwingt, sich in einer der Bewegung des Kolbens (16) entgegengesetzten Richtung zu verschieben, wenn der Kolben (16) an diesem einen Hebel bildenden Mittel in Anlage gelangt.

2. Bremskraftregler nach Anspruch 1, dadurch gekennzeichnet, daß der Boden (15) der zweiten Kammer (20) einen wieder einspringende Form annimmt, daß das Ende (42) des Kolbens (16) einen Teil (44, 48) aufweist, der gegenüber dem im wesentlichen tiefsten Teil (13) des Bodens (15) hervorragt, und daß der Anschlag (30) im wesentlichen im Zentrum einer vorgeformten Scheibe (40) ruht, die einen Hebel bildet, wenn der hervorragende Teil (44) auf ihr in Anlage gelangt.

3. Bremskraftregler nach Anspruch 2, dadurch gekennzeichnet, daß die Scheibe (40) einen flachen Umfangsteil und eine zentrale Zone in Form einer Kuppel aufweist, an deren Spitze der Anschlag (30) ruht.

4. Bremskraftregler nach Anspruch 1, dadurch gekennzeichnet, daß der Anschlag (30) im wesentlichen im Zentrum einer Scheibe (40) ruht, deren Umfangsteil (50) angehoben ist, um einen Hebel zu bilden, und an der ein von dem Ende (42) des Kolbens (16) hervorragender Teil (44) in Anlage gelangen kann.

## Claims

1. Brake regulator interposable between a hydraulic pressure source and a motor-vehicle brake circuit, of the type comprising a housing (12) equipped with a bore (14), a simple or differential piston (16) sliding in said bore and delimiting there a first (18) and a second (20) pressure chamber capable of being connected to the pressure source and to the brake circuit respectively, said chambers (18, 20) communicating with one another by means of a passage (22) made in said piston (16), a valve (24) mounted in said passage and stressed elastically to bear sealingly against a seat (26) formed on said piston (16), and a return spring (36) interposed between a movable element (32), the position of which varies as a function of the load of the vehicle, and said piston (16), so as to stress the latter towards the bottom (15) of said second chamber (20), in a rest position in which said valve (24) is set apart from its seat by a stop (30), characterized in that said stop (30) is mounted movably relative to the bottom (15) of said second chamber (20) and rests on a lever-forming means (40) which bears on said bottom (15) and on one end (42) of said piston (16) in said second chamber and which forces the stop to move in a direction opposite the movement of the piston (16) when this piston comes to bear on this lever-forming means.

2. Brake regulator according to Claim 1, characterized in that said bottom (15) of said second chamber (20) assumes a reentrant shape, in that said end (42) of said piston (16) comprises a part (44, 48) projecting opposite the substantially lowest part (13) of said bottom (15), and in that said stop (30) rests substantially at the center of a preformed washer (40) forming a lever when said projecting part (44) bears on it.

3. Brake regulator according to Claim 2, characterized in that said washer (40) has a plane peripheral part and a dome-shaped central zone, on top of which said stop (30) rests.

4. Brake regulator according to Claim 1, characterized in that said stop (30) rests substantially at the center of a washer (40), the peripheral part (50) of which is raised to form a lever and on which a part (44) projecting from said end (42) of said piston (16) is capable of bearing.
